(19) Europäisches Patentamt / European Patent Office / Office européen des brevets

(11) **EP 1 461 888 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(51) Int Cl.:
*H04L 1/00* *(2006.01)*    *H04L 1/08* *(2006.01)*
*H04L 27/34* *(2006.01)*

(21) Anmeldenummer: **02792697.1**

(22) Anmeldetag: **27.12.2002**

(86) Internationale Anmeldenummer:
**PCT/DE2002/004745**

(87) Internationale Veröffentlichungsnummer:
**WO 2003/058870 (17.07.2003 Gazette 2003/29)**

(54) **VERFAHREN UND VORRICHTUNG ZUR DATENÜBERTRAGUNG, WOBEI EIN BITRATENANPASSUNGSMUSTER ZWISCHEN SENDER UND EMPFÄNGER SIGNALISIERT WIRD**

METHOD AND DEVICE FOR TRANSFERRING DATA WHEREIN A BIT RATE ADAPTATION MODEL IS SIGNALLED BETWEEN THE TRANSMITTER AND THE RECEIVER

PROCÉDÉ ET DISPOSITIF DE TRANSMISSION DE DONNÉES, DONT UN MODÈLE D'ADAPTATION DE DÉBIT BINAIRE EST SIGNALÉ ENTRE ÉMETTEUR ET RÉCEPTEUR

(84) Benannte Vertragsstaaten:
**DE ES FR GB**

(30) Priorität: **07.01.2002 DE 10200296**
**15.01.2002 DE 10201330**

(43) Veröffentlichungstag der Anmeldung:
**29.09.2004 Patentblatt 2004/40**

(60) Teilanmeldung:
**05026909.1 / 1 635 498**

(73) Patentinhaber: **SIEMENS AKTIENGESELLSCHAFT**
**80333 München (DE)**

(72) Erfinder:
• **DÖTTLING, Martin**
**85579 Neubiberg (DE)**
• **RAAF, Bernhard**
**82061 Neuried (DE)**

(56) Entgegenhaltungen:
**WO-A-01/47124**    **DE-A- 19 959 179**
**US-B1- 6 247 150**

EP 1 461 888 B1

**EP 1 461 888 B1**

**Beschreibung**

Die vorliegende Erfindung betrifft ein Verfahren sowie eine entsprechend ausgestaltete Vorrichtung zur Datenübertragung gemäß einem ARQ-Verfahren, insbesondere einem Hybrid-ARQ-Verfahren, in einem Kommunikationssystem, insbesondere einem Mobilfunksystem.

Insbesondere in Verbindung mit Mobilfunksystemen wird häufig die Verwendung sogenannter Paketzugriffsverfahren bzw. paketorientierter Datenverbindungen vorgeschlagen, da die aufkommenden Nachrichtentypen häufig einen sehr hohen Burstfaktor besitzen, so dass nur kurze Aktivitätsperioden existieren, die von langen Ruhepausen unterbrochen sind. Paketorientierte Datenverbindungen können in diesem Fall die Effizienz im Vergleich zu anderen Datenübertragungsverfahren, bei denen ein kontinuierlicher Datenstrom vorhanden ist, erheblich steigern, da bei Datenübertragungsverfahren mit einem kontinuierlichen Datenstrom eine einmal zugeteilte Ressource, wie z.B. eine Trägerfrequenz oder ein Zeitschlitz, während der gesamten Kommunikationsbeziehung zugeteilt bleibt, d.h. eine Ressource bleibt auch dann belegt, wenn momentan keine Datenübertragungen anliegen, so dass diese Ressource für andere Netzteilnehmer nicht zur Verfügung steht. Dies führt zu einer nicht optimalen Nutzung des knappen Frequenzspektrums für Mobilfunksysteme.

Zukünftige Mobilfunksysteme, wie beispielsweise gemäß dem UMTS-Mobilfunkstandard ("Universal Mobile Telecommunications System"), werden eine Vielzahl unterschiedlicher Dienste anbieten, wobei neben der reinen Sprachübertragung Multimedia-Anwendungen zunehmend an Bedeutung gewinnen werden. Die damit einhergehende Dienstevielfalt mit unterschiedlichen Übertragungsraten erfordert ein sehr flexibles Zugriffsprotokoll auf der Luftschnittstelle zukünftiger Mobilfunksysteme. Paketorientierte Datenübertragungsverfahren haben sich hier als sehr geeignet erwiesen.

Im Zusammenhang mit UMTS-Mobilfunksystemen wurde bei paketorientierten Datenverbindungen ein sogenanntes ARQ-Verfahren ("Automatic Repeat Request") vorgeschlagen. Dabei werden die von einem Sender an einen Empfänger übertragenen Datenpakete empfängerseitig nach ihrer Decodierung hinsichtlich ihrer Qualität überprüft. Ist ein empfangenes Datenpaket fehlerhaft, fordert der Empfänger eine erneute Übertragung dieses Datenpakets von dem Sender an, d.h. es wird ein Wiederholungsdatenpaket von dem Sender an den Empfänger gesendet, welches mit dem zuvor gesendeten und fehlerhaft empfangenen Datenpaket identisch bzw. teilweise identisch ist (je nachdem, ob das Wiederholungsdatenpaket weniger oder gleich viele Daten wie das ursprüngliche Datenpaket enthält, wird von einer vollen oder einer partiellen Wiederholung gesprochen). Hinsichtlich dieses für den UMTS-Mobilfunkstandard vorgeschlagenen ARQ-Verfahrens, welches auch als Hybrid-ARQ-Verfahren bezeichnet wird, ist sowohl die Übertragung von Daten als auch von sogenannten Headerinformationen in einem Datenpaket vorgesehen, wobei die Headerinformationen auch Informationen zur Fehlerüberprüfung, wie beispielsweise CRC-Bits ("Cyclic Redundancy Check") aufweisen und auch zur Fehlerkorrektur codiert sein können (sogenannte "Forward Error Correction", FEC).

Aus der WO 01/47124 ist ein Verfahren bekannt, bei dem eine gleichmäßige, frei wählbare Verteilung von Paritätsbits in Wiederholungsrahmen erreicht wird. Zu diesem Zweck wird ein Zähler für jedes Paritätsbit um einen vorbestimmten Wert erhöht und es werden diejenigen Paritätsbits zur Übertragung ausgewählt bei denen der Zähler überläuft. Ein Startwert des Zählers und der vorbestimmte Wert können zum Erreichen einer gewünschten Punktierung ausgewählt werden.

Gemäß dem derzeitigen Stand der UMTS-Standardisierung wird die Übertragung der Bits der einzelnen Datenpakete bzw. Wiederholungsdatenpakete nach Durchführung einer entsprechenden Kanalcodierung mittels QAM-Modulation ("Quadraturamplitudenmodulation") vorgeschlagen. Dabei werden die einzelnen Bits über ein als "Gray-Mapping" bezeichnetes Verfahren auf entsprechende QAM-Symbole abgebildet, welche einen zweidimensionalen Symbolraum bilden. Dabei ist problematisch, dass bei der vorgeschlagenen QAM-Modulation mit einem Alphabetumfang, welcher mehr als vier QAM-Symbole umfasst, die Zuverlässigkeit der zu übertragenden Bits zwischen den höherwertigen Bits und den niedrigerwertigen Bits erheblich variiert, wobei dies insbesondere hinsichtlich der durchzuführenden Kanalcodierung nachteilig ist, da hierzu bevorzugt Turbo-Coder eingesetzt werden, welche zur Erzielung einer ausreichend hohen Leistungsfähigkeit gleichmäßige Bitzuverlässigkeiten erfordern. Bei einem Hybrid-ARQ--Verfahren, bei welchem das Wiederholungsdatenpaket mit dem ursprünglichen Datenpaket identisch ist, führt die zuvor erläuterte Eigenschaft der Variation der Bitzuverlässigkeiten dazu, dass bestimmte Bits der Datenpakete und der Wiederholungsdatenpakete jeweils an der gleichen Stelle im QAM-Symbolraum zu finden sind, so dass hierdurch die Leistungsfähigkeit der gesamten Datenübertragung reduziert wird und sich eine frühzeitige Begrenzung des Datendurchsatzes ergibt.

Zur Lösung dieses Problems wurde bereits vorgeschlagen, dass diejenigen Bits, welche an der gleichen Stelle in dem ursprünglichen Datenpaket und den Wiederholungsdatenpaketen auftreten, unterschiedlichen QAM-Symbolen im QAM-Symbolraum durch dynamische Umordnung des "Gray-Mapping" zugewiesen werden.

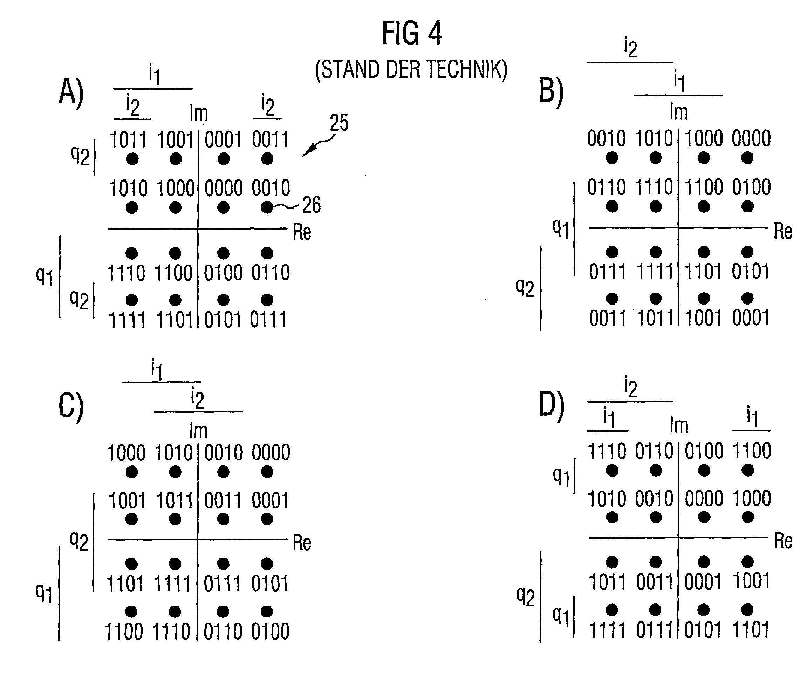

Dies soll nachfolgend näher unter Bezugnahme auf Figur 4A-4D erläutert werden. In Figur 4A ist die Signalkonstellation bzw. der QAM-Symbolraum für eine 16-QAM-Modulation dargestellt. Dabei werden jeweils Bits $i_1$ und $i_2$ sowie $q_1$ und $q_2$ auf ein entsprechendes QAM-Symbol 26 des zweidimensionalen QAM-Symbolraums 25 in der Reihenfolge $i_1 q_1 i_2 q_2$ abgebildet. Die für jedes Bit $i_i$, $i_2$, $q_1$, $q_2$ möglichen Spalten bzw. Zeilen von QAM-Symbolen 26 in dem zweidimensionalen QAM-Symbolraum 25 sind jeweils mit Hilfe entsprechender Striche markiert. So kann beispiels-

weise das Bit $i_1$ = "1" nur auf QAM-Symbole der ersten zwei Spalten des QAM-Symbolraums abgebildet werden. Aufgrund des "Gray-Mapping" ist die Zuverlässigkeit des höherwertigen Bits $i_1$ größer als die Zuverlässigkeit des niederwertigeren Bits $i_2$. Darüber hinaus schwankt die Bitzuverlässigkeit des Bits $i_2$ abhängig von dem jeweils übertragenen entsprechenden QAM-Symbol 26 (d.h. abhängig davon, ob das entsprechende QAM-Symbol 26 in der äußeren linken oder äußeren rechten Spalte des QAM-Symbolraums 25 angeordnet ist). Dasselbe gilt für die Bits $q_1$ und $q_2$, da die Abbildung der Bits $q_1$ und $q_2$ äquivalent zur Abbildung der Bits $i_1$ und $i_2$ (allerdings hierzu orthogonal) erfolgt.

Gemäß dem anhand der Figuren 4A-4D erläuterten herkömmlichen Verfahren wird vorgeschlagen, für Wiederholungsdatenpakete ein "Gray-Mapping" zu verwenden, welches sich von dem "Gray-Mapping" des ursprünglichen Datenpakets unterscheidet. D.h. für ein erstes Wiederholungsdatenpaket kann beispielsweise das in Figur 4B verdeutlichte "Gray-Mapping" verwendet werden, während für ein zweites Wiederholungsdatenpaket ein in Figur 4C gezeigtes "Gray-Mapping" und für ein drittes Wiederholungsdatenpaket ein in Figur 4D gezeigtes "Gray-Mapping" verwendet werden kann. Bei Vergleich der Darstellungen von Figur 4A-4D wird deutlich, dass ein und derselben Bitkombination $i_1$ $q_1$ $i_2$ $q_2$ jeweils unterschiedliche QAM-Symbole 26, d.h. unterschiedliche Punkte in dem zweidimensionalen QAM-Symbolraum 25, zugeordnet sind. Diese dynamische Variation des "Gray-Mapping" kann beispielsweise soweit gehen, dass nach einer bestimmten Anzahl von Wiederholungen jedes Bit $i_1$, $i_2$, $q_1$ und $q_2$ an einer Stelle im QAM-Symbolraum 25 mit sehr guter oder guter bzw. schlechter Zuverlässigkeit übertragen wird, wobei dieses Verfahren für eine unterschiedliche Anzahl von Wiederholungen optimiert werden kann.

Aus Figur 4A-4D ist ersichtlich, dass diese Vorgehensweise relativ aufwendig ist, da für jedes Wiederholungsdatenpaket das "Gray-Mapping" verändert werden muss.

Der vorliegenden Erfindung liegt daher die Aufgabe zugrunde, ein Verfahren sowie eine entsprechende ausgestaltete Vorrichtung zur Datenübertragung gemäß einem ARQ-Verfahren vorzu= schlagen, bei dem das zuvor erläuterte Problem, d.h. die Erzielung einer zuverlässigen Datenübertragung mit einem hohen Datendurchsatz, auf einfache Art und Weise gelöst werden kann.

Diese Aufgabe wird durch die Merkmale der unabhängigen Ansprüche gelöst. Die Unteransprüche definieren jeweils bevorzugte und vorteilhafte Ausführungsformen der vorliegenden Erfindung. Im Rahmen der Erfindung liegen auch Sende- und Empfangsvorrichtungen, die zur Durchführung der mit den Verfahrensansprüchen definierten Verfahren eingerichtet sind.

Die Erfindung basiert somit auch auf dem Gedanken, zur Bitratenanpassung zu verwendende Bitratenanpassungsmuster, insbesondere zur Berechnung dieser Bitratenanpassungsmuster benötigten Parameter, zwischen dem Sender und Empfänger zu signalisieren bzw. zu übertragen, um die übertragenen Informationen empfangsseitig mit guter Qualität wieder zu gewinnen.

Je nach Ausführungsvariante der Erfindung erfolgt die Signalisierung des Bitratenanpassungsmusters bzw. die Übertragung der zur Berechnung dieser Bitratenanpassungsmuster benötigten Parameter dabei von dem Sender an den Empfänger oder von dem Empfänger an den Sender.

Insbesondere kann für diese Signalisierung des Bitratenanpassungsmusters ein Bit vorgesehen sein, das beispielsweise mit dem entsprechenden Datenpaket oder als Teil des entsprechenden Datenpaketes übertragen werden kann; je nachdem, ob dieses Bit mit einer "1" oder einer "0" belegt ist, liegt beispielsweise ein selbstdecodierbares oder ein nicht selbstdecodierbares Datenpaket vor.

Dabei enthalten selbstdekodierbare Datenpakete so viele systematische Bits, dass das Datenpaket empfangsseitig bei Annahme eines optimalen Kanals alleine aufgrund der Bits dieses Datenpaketes decodierbar ist. Insbesondere kann ein selbstdecodierbares Datenpaket alle systematischen Bits enthalten.

Die Erfindung basiert nun auch auf der Erkenntnis, dass für den Fall der Repetierung (Bits des Datenpaketes werden innerhalb des Datenpaketes zumindest teilweise mehrfach übertragen) immer alle systematischen Bits übertragen werden und daher immer ein selbstdecodierbares Datenpaket vorliegt. In diesem Fall ist daher eine Signalisierung, ob ein selbstdecodierbares oder ein nicht selbstdecodierbares Datenpaket vorliegt, überflüssig und die für diesen Zweck vorgesehene Übertragungsressource, wie beispielsweise das obengenannte Bit, kann für andere Zwecke verwendet werden. Insbesondere kann diese Übertragungsressource zur Signalisierung von zur Bitratenanpassung zu verwendende Bitratenanpassungsmuster, insbesondere zur Übertragung der zur Berechnung dieser Bitratenanpassungsmuster benötigten Parameter, verwendet werden. Dadurch kann es möglich sein, für den Fall der Repetierung mehr verschiedene Ratenanpassungsmuster für selbstdecodierbare Datenpakete zu signalisieren als für den Fall der Punktierung.

Insgesamt wird durch die Erfindung die Datenübertragung gemäß einem ARQ-Verfahren flexibler und die zur Verfügung stehenden Übertragungsressourcen besser ausgenützt.

Eine Weiterbildung der Erfindung basiert auch auf dem Gedanken, auf die einzelnen Bits des ursprünglichen Datenpakets sowie der einzelnen Wiederholungsdatenpakete unterschiedliche Ratenanpassungsmuster, d.h. unterschiedliche Punktierungs- oder Repetierungsmuster, anzuwenden, so dass Bits mit identischem Informationsursprung, insbesondere alle Bits mit identischem Informationsursprung, nach Durchführung der Bitratenanpassung an unterschiedlichen Stellen in dem Datenpaket und in dem Wiederholungsdatenpaket von dem Sender an den Empfänger übertragen werden.

Dadurch kommen die entsprechenden Bits bereits vor Durchführung der QAM-Modulation an unterschiedlichen Stellen in dem jeweiligen Datenpaket zu liegen und werden somit ohne Abwandlung des "Gray-Mapping" unterschiedlichen Punkten bzw. QAM-Symbolen in dem QAM-Symbolraum zugeordnet.

Mit Hilfe der Verschiebung der Ratenanpassungsmuster zwischen dem ursprünglich gesendeten Datenpaket einerseits zu dem nachfolgenden Wiederholungsdatenpaket bzw. den nachfolgenden Wiederholungsdatenpaketen andererseits wird somit zwar ein und dieselbe Coderate erhalten, die Übertragungsqualität und die Bitfehlerrate kann jedoch verbessert werden.

Auf diese Weise wird eine gleichmäßige Verteilung der Zuverlässigkeit der zu übertragenen Bits zwischen dem Datenpaket und den nachfolgenden Wiederholungsdatenpaketen erzielt, so dass eine leistungsfähige Kanalcodierung, beispielsweise unter Einsatz von Turbo-Codierern durchgeführt werden kann, so dass insgesamt eine ausreichend hohe Leistungsfähigkeit der Informations- bzw. Datenübertragung bei gleichzeitiger Realisierung eines hohen Datendurchsatzes gewährleistet ist.

Bei Anforderung mehrerer Wiederholungsdatenpakete ist es vorteilhaft, wenn das jeweils angewendete Ratenanpassungsmuster, d.h. das jeweilige Punktierungs/Repetierungsmuster, von Wiederholungsdatenpaket zu Wiederholungsdatenpaket verschoben angewendet wird.

Eine weitere Ausgestaltung sieht zur Bitratenanpassung den Einsatz eines an sich bekannten Ratenanpassungsalgorithmus vor, wobei ein gemäß diesem Ratenanpassungsalgorithmus verwendeter Offsetwert, welcher wesentlich das jeweils verwendete Ratenanpassungsmuster bestimmt, zwischen dem ursprünglichen Datenpaket und dem Wiederholungsdatenpaket bzw. den einzelnen Wiederholungsdatenpaketen variiert wird. Durch die Variation dieses Offsetwerts kann eine leistungsfähigere Codierung als bei einem herkömmlichen Hybrid-ARQ--Verfahren erzielt werden.

Bevorzugt kann hierzu der kanalcodierte Bitstrom auf mehrere parallele Teilbitströme aufgeteilt werden (sogenannte Bitseparation), wobei auf die einzelnen Teilbitströme jeweils voneinander unabhängige Ratenanpassungsmuster, d.h. eine voneinander unabhängige Punktierung oder Repetierung der Bits, angewendet wird, so dass nach abschließender Kombination der entsprechenden Bits dieser Teilbitströme (sogenannte Bitkollektion) die gewünschte Ratenanpassung mit dem unterschiedlichen Offsetwert bezüglich dem ursprünglichen Datenpaket und den einzelnen Wiederholungsdatenpaketen erzielt werden kann. Durch die Aufteilung des Bitstroms in mehrere parallele Teilbitströme kann eine besonders hohe Flexibilität bei der Kanalcodierung erzielt werden.

Da der jeweilige Empfänger der auf diese Art und Weise verarbeiteten Datenpakete bzw. Wiederholungsdatenpakete den jeweils verwendeten Offsetwert kennen sollte und eine explizite Übertragung dieses Offsetwerts nachteilig sein kann, kann der Offsetwert beispielsweise synchron mit der jeweiligen Zeitschlitznummer ("Time Slot") und/oder synchron mit der jeweiligen Rahmennummer ("Frame") verändert werden, so dass der Empfänger aus dem jeweils empfangenen Zeitschlitz bzw. Rahmen unmittelbar auf den jeweils verwendeten Offsetwert schließen kann. Eine andere Ausführungsvariante der Erfindung sieht vor, diesen Offsetwert zwischen Sender und Empfänger zu signalisieren.

Bei der zuvor erläuterten Bitseparation mit Aufteilung der Bits auf mehrere parallele Teilbitströme können bei der abschließenden Bitkollektion die unterschiedlichen parallelen Teilbitströme pro Datenpaket bzw. Wiederholungsdatenpaket auch anteilig miteinander kombiniert werden, wobei dies besonders vorteilhaft bei Anwendung von Bitrepetierung einsetzbar ist. Der zuvor erläuterte Offsetwert kann für das ursprüngliche Datenpaket sowie die einzelnen Wiederholungsdatenpakete derart eingestellt werden, dass die Verschiebung der daraus resultierenden Ratenanpassungsmuster zueinander maximal ist und/oder möglichst viele der sich einander entsprechenden Bits des ursprünglichen Datenpakets bzw. des jeweiligen Wiederholungsdatenpakets bei der abschließenden Modulation auf unterschiedliche Punkte in dem zweidimensionalen Symbolraum abgebildet werden.

Das zuvor erläuterte Verfahren funktioniert optimal, wenn die Bits unmittelbar nach Durchführung der Ratenanpassung auf den jeweils gewünschten Modulations-Symbolraum abgebildet werden. Dies ist jedoch nicht immer der Fall, da zwischen der Ratenanpassung und der Modulation häufig noch ein sogenanntes Interleaving stattfindet, durch welches die Bits zeitlich umgeordnet werden. Bei einem zufälligen Interleaver würden benachbarte Bits zufällig auf die entsprechenden Punkte bzw. Symbole des zweidimensionalen Symbolraums verteilt werden, so dass die Verschiebung um ein Bit, welche durch die zuvor erläuterte Variation des Offsetwerts erreicht werden kann, auch eine zufällige Veränderung der Punkte bzw. Symbole des zweidimensionalen Symbolraums ergeben würde. Dies wäre jedoch nicht optimal, da am besten die Zuordnung so geändert wird, dass ein bei der Übertragung des ursprünglichen Datenpakets wenig zuverlässiges Bit bei einem nachfolgend zu übertragenen Wiederholungsdatenpaket auf eine Position des Modulations-Symbolraums (z.B. des QAM-Symbolraums) mit höherer Zuverlässigkeit und umgekehrt abgebildet wird, während bei einer zufälligen Vertauschung lediglich ein Gewinn von ca. 50% des maximal möglichen Gewinns erzielt werden könnte.

Aus diesem Grund wird vorzugsweise für das Interleaving ein sehr regulärer Interleaver, beispielsweise ein Blockinterleaver, eingesetzt, wobei zudem die Anzahl der Spalten, auf welche der Interleaver die Bits mit anschließender Spaltenvertauschung bzw. Spaltenpermutation verteilt, und die Anzahl der unterschiedlich stark gewichteten bzw. unterschiedlich zuverlässigen Punkte oder Symbole des jeweils verwendeten Symbolraums teilerfremd sein sollte, so dass sich eine optimale Zuordnung ergibt.

Diese Ausführungsvariante weist gegenüber der eingangs erläuterten und aus dem Stand der Technik bekannten Vorgehensweise eine deutlich geringere Komplexität auf.

Die vorliegende Erfindung wird nachfolgend näher unter Bezugnahme auf die beigefügte Zeichnung anhand bevorzugter Ausführungsbeispiele einer paketorientierten Datenübertragung in einem Mobilfunksystem erläutert, wobei die vorliegende Erfindung selbstverständlich nicht auf Mobilfunksysteme beschränkt ist, sondern allgemein in jeder Art von Kommunikationssystemen eingesetzt werden kann, in denen ein ARQ-Verfahren zur Datenübertragung vorgesehen ist.

Figur 1 zeigt eine Darstellung zur Verdeutlichung der Signalverarbeitung gemäß einem paketorientierten ARQ-Verfahren der vorliegenden Erfindung,

Figur 2 zeigt eine Darstellung zur Verdeutlichung der Kommunikation in einem Mobilfunksystem,

Figur 3 zeigt einen Ratenanpassungsalgorithmus, welcher beispielsweise im Rahmen der vorliegenden Erfindung zur Ratenanpassung eingesetzt werden kann,

Figur 4A-4D zeigen Darstellungen zur Verdeutlichung der Abbildung von Bits eines ursprünglich gesendeten Datenpakets bzw. von entsprechenden Wiederholungsdatenpaketen auf QAM-Symbole gemäß dem Stand der Technik.

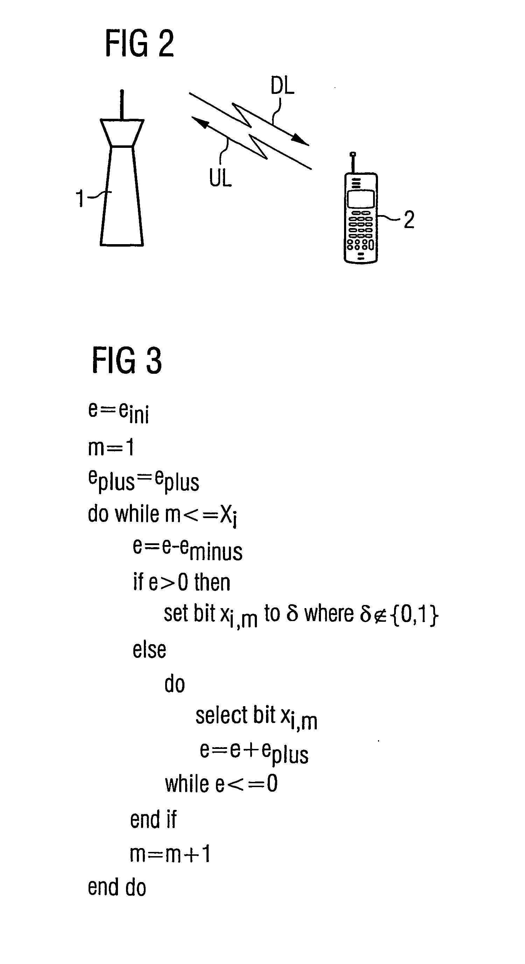

Wie bereits zuvor erläutert worden ist, wird nachfolgend davon ausgegangen, dass mit Hilfe der vorliegenden Erfindung eine paketorientierte Datenübertragung in einem Mobilfunksystem, wie es beispielsweise schematisch in Figur 2 gezeigt ist, realisiert werden soll. Dabei ist in Figur 2 beispielhaft die Kommunikation zwischen einer Basisstation 1 und einer Mobilstation 2 eines Mobilfunksystems, z.B. eines UMTS-Mobilfunksystems, dargestellt. Die Übertragung von Informationen von der Basisstation 1 zu der Mobilstation 2 erfolgt über den sogenannten "Downlink"-Kanal DL, während die Übertragung der Informationen von der Mobilstation 2 zu der Basisstation 1 über den sogenannten "Uplink"-Kanal UL erfolgt.

Die vorliegende Erfindung wird nachfolgend beispielhaft anhand einer paketorientierten Datenübertragung von der Basisstation 1 an die Mobilstation 2, d.h. anhand einer paketorientierten Datenübertragung über den "Downlink"-Kanal erläutert, wobei die vorliegende Erfindung jedoch analog auf eine Datenübertragung ‚über den "Uplink"-Kanal anwendbar ist. Des Weiteren wird die vorliegende Erfindung nachfolgend anhand der in dem jeweiligen Sender durchzuführenden Signalverarbeitungsmaßnahmen erläutert, wobei jedoch zu beachten ist, dass in dem jeweiligen Empfänger zur Auswertung der auf diese Weise senderseitig verarbeiteten Daten eine entsprechende Signalverarbeitung in umgekehrter Reihenfolge erforderlich ist, so dass von der vorliegenden Erfindung nicht nur die Senderseite, sondern auch die Empfängerseite betroffen ist.

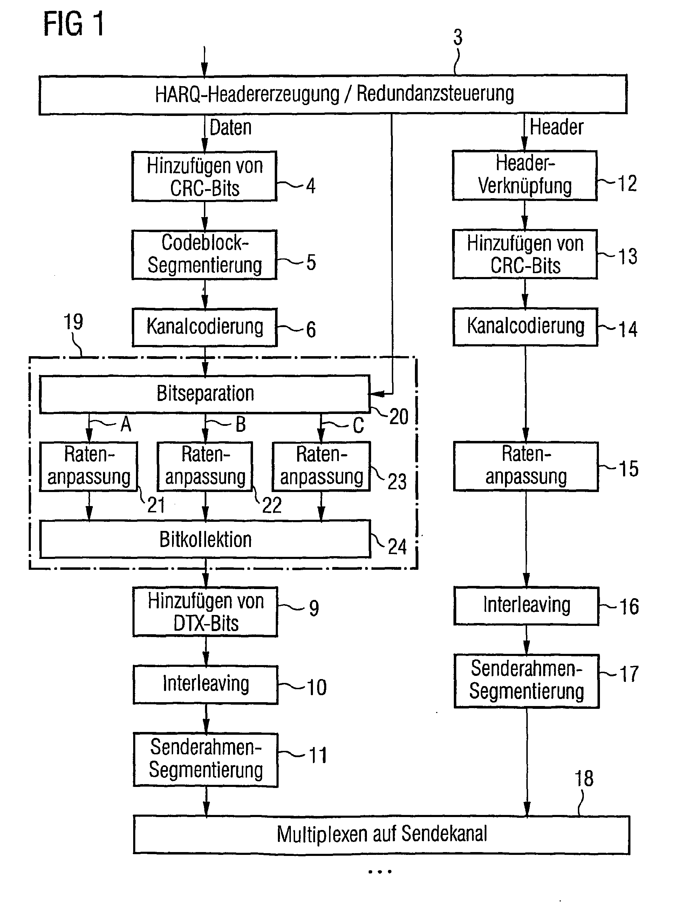

In Figur 1 ist die Signalverarbeitung der in den Datenpaketen zu übertragenden Daten- und Headerinformationen nach einem erfindungsgemäßen Hybrid-ARQ-Verfahren dargestellt.

Auf der Headerseite werden die von einem Funktionsblock 3 erzeugten Headerinformationen einem Funktionsblock 12 zugeführt, welcher dafür sorgt, dass sämtliche Header von allen Datenpaketen, die in ein und demselben Funkpaket gesendet werden sollen, zu einem einzigen Header zusammengefasst werden (sogenannte "Header Concatenation"). Ein Funktionsblock 13 fügt den daraus resultierenden Headerinformationen CRC-Bits zur Headererkennung hinzu. Anschließend wird von einem Funktionsblock 14 eine Kanalcodierung und von einem Funktionsblock 15 eine Ratenanpassung des daraus resultierenden Bitstroms durchgeführt. Ein Interleaver 16 bewirkt, dass die ihm zugeführten Symbole bzw. Bits auf bestimmte Art und Weise umgeordnet und zeitlich gespreizt werden. Die von dem Interleaver 16 ausgegebenen Datenblöcke werden von einem Funktionsblock 17 den einzelnen Sende- bzw. Funkrahmen zugeordnet (sogenannte "Radio Frame Segmentation").

Auf der Datenseite ist ebenso ein Funktionsblock 4 zum Hinzufügen von CRC-Bits vorgesehen. Ein Funktionsblock 5 dient zur Aufspaltung der einem Kanalcodierer 6 zugeführten Daten derart, dass von dem Kanalcodierer 6 stets eine auf eine bestimmte Bitanzahl beschränkte Codierung durchgeführt werden kann.

Durch die von dem Kanalcodierer 6 durchgeführte Kanalcodierung wird den eigentlich zu sendenden Daten redundante Information hinzugefügt. Von dem Kanalcodierer werden systematische Bits und Paritätsbits ausgegeben, wobei ein systematisches Bit jeweils mit einem Informationsbit identisch ist und Paritätsbits Redundanzbits sind, die aus den Informationsbits ermittelt werden. Bei einem ARQ-Verfahren haben enthalten nacheinander gesendete Datenpakete Bits mit gleichem Informationsursprung, d.h. Bits, die jeweils von den gleichen Informationsbits abhängen.

Die von dem Kanalcodierer 6 ausgegebenen Bits werden einem Funktionsblock 19 zugeführt, welcher durch Ausblenden bzw. Weglassen einzelner Bits (sogenannte Punktierung) oder durch Wiederholen einzelner Bits (sogenannte Repetierung) die Bitrate des Bitstroms entsprechend einstellt. Von einem anschließenden Funktionsblock 9 können dem Datenstrom sogenannte DTX-Bits ("Discontinuous Transmission") hinzugefügt werden. Des weiteren sind auch auf der Datenseite Funktionsblöcke 10 und 11 vorgesehen, welche dieselben Funktionen wie die auf der Headerseite vorgesehenen Funktionsblöcke 16 und 17 wahrnehmen.

Abschließend werden die auf der Daten- und Headerseite ausgegebenen Bits von einem Funktionsblock 18 auf den jeweils vorhanden physikalischen Übertragungs- bzw. Sendekanal abgebildet bzw. gemultiplexed (sogenanntes "Multiplexing") und mit Hilfe einer geeigneten Modulation, beispielsweise einer QAM-Modulation, an den Empfänger übertragen.

Bei dem Hybrid-ARQ-Verfahren wird bei einem fehlerhaften Empfang bzw. einer fehlerhaften Decodierung eines Datenpakets durch den Empfänger ein Wiederholungsdatenpaket angefordert.Das Wiederholungspaket ist mit dem zuvor gesendeten und fehlerhaft empfangenen Paket ganz (HARQ type I, Chase Combining) oder partiell identisch. Die letzteren Verfahren werden als partielle inkrementelle Redundanz (incremental redundancy, IR) Verfahren, bzw. als HARQ type III bezeichnet. Als weitere Möglichkeit können die Wiederholungspakete auch rein aus zusätzlicher Redundanzinformation (sog. Paritätbits) bestehen (Full IR bzw. HARQ type II).

Abhängig davon, ob das Wiederholungsdatenpaket weniger oder gleich viele Daten wie das ursprüngliche Datenpaket aufweist, wird von einer vollen oder partiellen Wiederholung gesprochen. Das Datenpaket und das jeweilige Wiederholungsdatenpaket weisen somit zumindest teilweise Bits mit einem gleichen Informa-tionsursprung auf. Der Empfänger kann somit durch gemeinsame Auswertung des ursprünglich gesendeten Datenpakets sowie der angeforderten nachfolgenden Wiederholungsdatenpakete die ursprünglich gesendete Information mit besserer Qualität wiedergewinnen.

Der Funktionsabschnitt 19 umfasst einen Funktionsblock 20, welcher in Abhängigkeit von einer Ansteuerung durch den Funktionsblock 3 die von dem vorgeschalteten Kanalcodierer 6 ausgegebenen codierten Bits auf mindestens zwei parallele Teilbitströme aufteilt, welche jeweils separat, d.h. unabhängig voneinander, einer Ratenanpassung unterzogen werden. In Figur 1 sind diesbezüglich drei Teilbitströme A-C dargestellt, wobei für jeden Teilbitstrom ein Funktionsblock 21-23 zur Durchführung einer entsprechenden Ratenanpassung, d.h. zur Punktierung oder Repetierung einzelner Bits, vorgesehen ist. Auf diese Weise entstehen mehrere unterschiedlich codierte parallele Teilbitströme, welche einem weiteren Funktionsblock 24 zugeführt werden. Dieser weitere Funktionsblock 24 hat die Aufgabe, die einzelnen Bits der parallelen Bitströme in derselben Reihenfolge, welche von dem Funktionsblock 20 für die Bitseparation, d.h. für die Aufteilung auf einzelnen parallelen Teilbitströme, verwendet worden ist, aufzusammeln (Bitkollek-tion). Auf diese Weise wird sichergestellt, dass sich insgesamt die Reihenfolge der nach der Ratenanpassung übriggebliebenen Bits nicht ändert.

Wie bereits zuvor erläutert worden ist, kann die für die einzelnen Teilbitströme A-C vorgesehene Ratenanpassung durch die Funktionsblöcke 21-23 vollkommen unabhängig voneinander erfolgen. Insbesondere können auch die Bits eines oder mehrerer Teilbitströme überhaupt keiner Punktierung oder Repetierung unterzogen werden. Insgesamt ist die Ratenanpassung der einzelnen parallelen Teilbitströme A-C so zu wählen, dass von dem gesamten Funktionsabschnitt 19 auf den von dem Funktionsblock 6 ausgegebenen kanalcodierten Bitstrom pro Datenpaket bzw. Wiederholungsdatenpaket ein gewünschtes Ratenanpassungsmuster angewendet wird. Mit der in Figur 1 gezeigten Realisierung des Funktionsabschnitts 19 mit mehreren parallel durchgeführten Ratenanpassungen kann eine äußerst hohe Flexibilität bei der Codierung erzielt werden.

Der Funktionsabschnitt 19 ist derart ausgestaltet, dass er in Abhängigkeit von der Ansteuerung durch den Funktionsblock 3 auf die Bits eines Wiederholungsdatenpakets ein anderes Ratenanpassungsmuster als auf die Bits des entsprechenden ursprünglich gesendeten Datenpakets anwendet. D.h. dem Funktionsabschnitt 19 wird von dem Funktionsblock 3 mitgeteilt, ob von dem jeweiligen Empfänger ein Wiederholungsdatenpaket angefordert worden ist, wobei der Funktionsabschnitt 19 in diesem Fall die von den einzelnen Funktionsblöcken 21-23 realisierten Ratenanpassungsmuster derart wählt bzw. einstellt, dass insgesamt die Bits des Wiederholungsdatenpakets mit einem anderen Ratenanpassungsmuster als die Bits des zugrundliegenden ursprünglich gesendeten Datenpakets verarbeitet werden.

Die insgesamt von dem Funktionsabschnitt 19 realisierte Ratenanpassung kann beispielsweise gemäß dem in Figur 3 dargestellten Ratenanpassungsalgorithmus, welcher an sich bereits aus dem Stand der Technik bekannt ist, durchgeführt werden.

Der im UMTS Standard enthaltene Rate Matching (Ratenanpassungs) Algorithmus ist in [25.212] beschrieben. Als wesentliche Parameter verwendet er:

- $X_b$ : Anzahl codierter Bits pro Paket im Bitstrom $b$
- $e_{ini}$: Anfangs-Fehlerwert ($N_{TTI}$ / 3)
- $e_{plus}$: Inkrement des Fehlerwertes bei Punktierung / Repetition
- $e_{minus}$: Dekrement des Fehlerwertes pro Ausgangsbit

Diese Parameter sind im bestehenden Standard z. B. für den Downlink turbocodierter Transportkanäle mit fester Bitposition (Kapitel 4.2.7.2.1 in [25.212]) im Falle von Punktierung wie folgt zu ermitteln:

$$e_{ini} = N_{max} \cdot \qquad\qquad (5.1)$$

Hierbei bezeichnet $N_{max}$ das über alle Transportformate und Transportkanäle ermittelte Maximum der Anzahl Bits pro parity Bitstrom vor dem Rate Matching. Die Inkremente und Dekremente des Fehlerwerts berechnen sich zu:

$$e_{plus} = a \times N_{max} \quad , \quad e_{minus} = a \times \left| \Delta N_i^b \right| , \qquad\qquad (5.2)$$

wobei $a = 2$ für den ersten parity Bitstrom und $a = 1$ für den zweiten parity Bitstrom gilt. $\left| \Delta N_i^b \right|$ ist die Anzahl der pro Bitstrom $b$ punktierten Bits für den Transportkanal $i$.

Dabei wird insbesondere ein Ratenanpassungsparameter $e_{ini}$ verwendet, welcher einen für die jeweils durchgeführte Ratenanpassung gültigen Offsetwert hinsichtlich des jeweils angewendeten Ratenanpassungsmusters bezeichnet. Zu Beginn des in Figur 3 dargestellten Ratenanpassungsalgorithmus wird eine Fehlervariable e mit diesem Offsetwert $e_{ini}$ initialisiert, wobei der Fehler e im Falle einer Punktierung beispielsweise das Verhältnis zwischen der augenblicklichen Punktierungsrate und der gewünschten Punktierungsrate bezeichnet.

Anschließend wird der Index m des augenblicklich zu verarbeitenden Bits auf das erste Bit, d.h. auf den Wert 1 gesetzt und ein Hilfsfehlerparameter $e_{plus}$ initialisiert.

Für sämtliche Bits des jeweils zu verarbeitenden Datenpakets Nr. i wird anschließend eine Schleife durchlaufen, wobei die Bitanzahl des jeweiligen Datenpakets mit $X_i$ bezeichnet ist.

Innerhalb dieser Schleife wird zunächst der Fehler e unter Verwendung eines weiteren Hilfsfehlerparameters $e_{minus}$ erneuert und geprüft, ob der daraus resultierende Fehler e größer als Null ist, um auf diese Weise festzustellen, ob das entsprechende Bit punktiert werden soll oder nicht. Ist die zuvor erwähnte Bedingung erfüllt, wird das entsprechende Bit auf einen Hilfswert δ gesetzt und somit punktiert, d.h. für die nachfolgende Datenübertragung gesperrt.

Ist hingegen die zuvor genannte Bedingung nicht erfüllt, wird das entsprechende Bit für die Datenübertragung ausgewählt und der Fehler e unter Verwendung des erstgenannten Hilfsfehlerparameters $e_{plus}$ neu berechnet.

Zum Abschluss des Ratenanpassungs- bzw. Punktierungsalgorithmus wird der Bitindex m inkrementiert und somit das nächste Bit für die zuvor erläuterte Verarbeitung ausgewählt.

Das auf die Bits eines Datenpakets bzw. Wiederholungsdatenpakets angewendete Ratenanpassungsmuster kann wesentlich durch entsprechende Wahl des Offsetwerts $e_{ini}$ beeinflusst werden. Durch Variation dieses Offsetwerts $e_{ini}$ kann somit auf ein Wiederholungsdatenpaket ein anderes Ratenanpassungsmuster als auf das entsprechende ursprünglich gesendete Datenpaket angewendet werden, wobei die Ratenanpassung insbesondere bezogen auf die Paritätsbits der einzelnen Teilbitströme A-C (vergleiche Figur 1) angewendet werden kann.

Der Offsetwert $e_{ini}$ wird für das ursprünglich gesendete Datenpaket und das Wiederholungsdatenpaket vorteilhafterweise derart gewählt, dass die Verschiebung der daraus resultierenden Ratenanpassungsmuster zueinander maximal, d.h. möglichst groß, ist. Darüber hinaus ist der Offsetwert $e_{ini}$ für das ursprünglich gesendete Datenpaket und das Wiederholungsdatenpaket vorteilhafterweise derart zu wählen, dass möglichst viele der sich einander entsprechenden Bits der beiden Pakete bei der abschließenden Modulation, insbesondere der QAM-Modulation, auf unterschiedliche Punkte, d.h. unterschiedliche QAM-Symbole, des entsprechenden zweidimensionalen QAM-Symbolraums abgebildet werden (vergleiche diesbezüglich beispielsweise die Abbildungen von Figur 4).

Für die Erstübertragung wird in der Regel ein selbstdecodierbares Datenpaket verwendet, d.h. es werden beispielsweise alle systematischen Bits übertragen. Ist abzüglich dieser systematischen Bits nur noch für einen Teil der Paritätbits Platz in der Übertragung, werden die Paritätbits entsprechend punktiert (d. h. nicht übertragen). Ist der vorhandene Platz jedoch größer als alle existierenden Paritätbits, so werden systematische Bits und Paritätbits mit gleicher Rate repetiert (wiederholt). Die Auswahl der punktierten/repetierten Bits erfolgt in UMTS durch einen Algorithmus, der eine möglichst gute Gleichverteilung dieser punktierten/repetierten Bits innerhalb des codierten Datenblocks realisiert.

In einer Wiederholungsübertragung werden basierend auf einer bestimmten Anzahl Signalisierungsbits, das Ratenanpassungsmuster und somit die jeweils zu übertragenden Bits so ausgewählt, dass zum einen verschiedene HARQ-Typen realisiert werden, und zum anderen in jeder Übertragung möglichst andere Bits übertragen werden, um Dekodiergewinn und / oder eine gleichmäßige Verteilung der Gesamtenergie auf alle Bits zu erreichen. Ein bestimmtes Ratenanpassungsmuster oder die Parameter zur Berechung eines bestimmten Ratenanpassungsmusters entsprechen dabei einer bestimmten Redundanzversion.

Eine Variante dieser Erfindung zeigt, wie für eine gegebene Anzahl Bits zur Signalisierung der verschiedenen Redundanzversionen, sowohl für den Fall der Punktierung als auch insbesondere für den Fall der Repetierung die Auswahl der Redundanzversionen optimiert werden kann.

Um dem Empfänger eine korrekte Interpretation des empfangenen Datenpaketes zu ermöglichen, wird zwischen Sender und Empfänger signalisiert, ob es sich bei dem Datenpaket um ein selbstdekodierbares oder ein nicht selbstdekodierbares Datenpaket handelt. Hierfür wird ein Bit Signalisierungsinformation benötigt. Innerhalb eines jeweiligen Typs (selbstdekodierbar oder nicht selbstdecodierbar) können dann weitere Redundanzversionen definiert werden, welche ebenfalls explizit signalisiert werden können. Stehen zur Signalisierung n Bit zur Verfügung, so besteht die gesamte zu signalisierende Information somit aus einem Bit für die Unterscheidung selbstdecodierbar/ nicht selbstdecodierbar und in n-1 Bit für die Beschreibung einer bestimmten Redundanzversion aus einer Vielzahl von Redundanzversionen :

Verwendung der Signalisierungsbits

| Selbstdekodierbarkeit | 1 Bit |
|---|---|
| Redundanzversion | n - 1 Bit |

Die Unterscheidung selbstdekodierbar / nicht selbstdekodierbar macht aber nur im Falle von Punktierung Sinn, bei dem nicht alle kodierten Bits übertragen werden können. Im Falle von Repetierung ist die Selbstdekodierbarkeit a priori gegeben, da ja alle kodierten Bits, manche sogar mehrfach übertragen werden können. In dem Fall der Repetierung ist es daher vorteilhaft, alle n Bits zur Unterscheidung von verschiedenen Redundanzversionen zu verwenden. Insbesondere kann damit im Falle der Repetierung auch für kleine n erheblich besser sichergestellt werden, dass nach Übertragung eines Wiederholungsdatenpaketes und empfangsseitiger Überlagerung des ersten Datenpaketes mit dem Wiederholungsdatenpaket eine möglichst ausgeglichene Energieverteilung auf alle übertragenen Bits erreicht wird. Ein Ausführungsbeispiel der erfindungsgemäßen Verwendung der Signalisierungsbits ist dann in folgender Tabelle gezeigt:

Verwendung der Signalisierungsbits bei Punktierung und Repetierung

|  | Punktierung | Repetierung |
|---|---|---|
| Selbstdekodierbarkeit | 1 Bit | 0 Bit |
| Redundanzversion | n - 1 Bit | n Bit |

Beispielsweise kann hierbei n=3 gewählt werden. Das erlaubt eine vernünftige Anzahl von unterschiedlichen Redundanzversionen und erfordert andererseits keine unnötig hohe Anzahl von Signalisierungs-bits.

Das hier vorgestellte Verfahren optimiert die Signalisierung indem die Bedeutung der Signalisierungsbits davon abhängt, ob in der jeweiligen Übertragung Bits wiederholt oder punktiert werden. Sind insgesamt Ng Signalisierungsworte vorgesehen (das heißt Ng= $2^n$ falls n Bit Signalisierung vorgesehen sind), so werden die Ng Signalisierungsworte wie folgt aufgeteilt:

Bei Punktierung werden die Signalisierungsworte in zwei Teilmengen aufgeteilt, eine für Übertragungen vom selbstdekodierbaren Typus (d. h. systematische Bits sind enthalten), eine zweite für Übertragungen vom nicht selbstdekodierbaren Typus (in der Regel keine systematischen Bits enthalten, insbesondere keine systematischen Bits enthalten). Innerhalb dieser Teilmengen unterscheiden verschiedene Signalisierungsworte dann verschiedene Redundanzversionen.

Es können dabei Ns Redundanzversionen vom selbstdekodierbaren Typus (Partial Incremental Redundancy) ausgewählt werden, welche selbstdekodierbare Redundanzversionen bezeichnen und Ng - Ns Redundanzversionen vom nicht selbstdekodierbaren Typus (Full Incremental Redundancy) bereitgestellt werden. Falls Ns = Ng/2 gilt, lässt sich die bereits vorgestellte Kodierung verwenden. Ein anderer Extremfall ist Ns = 1. In diesem Fall wird nur eine einzige selbstdekodierbare Redundanzversion vorgesehen (die für die erste Übertragung vorgesehen ist) und Ng-1 nicht selbstdekodierbare Redundanzversionen. Diese Wahl wird optimal sein, wenn Ng relativ klein ist (höchstens 8), weil dann trotzdem noch eine relativ hohe Anzahl von Redundanzversionen mit Full IR definiert werden können.

Bei Repetierung werden keine Teilmengen gebildet und alle Signalisierungsworte zur Unterscheidung verschiedener Redundanzversionen verwendet.

Wesentliche Neuerungen dieses Ausführungsbeispiels sind die Unterscheidung der Fälle Repetierung und Punktierung für die Bedeutung der Signalisierungsbits und die Optimierung der Anzahl möglicher HARQ-Typen und verschiedener Redundanzversionen sowohl im Falle von Repetierung als auch für Punktierung bei gegebener Anzahl Signalisierungsbits.

Die Generierung der unterschiedlichen Redundanzv.ersionen kann dabei gemäß einer Parametervariation des Parameters $e_{ini}$ erfolgen, kann aber auch durch ein beliebiges anderes Verfahren generiert werden.

Bislang wurden nur solche Parameter beschrieben, welche die Ratenanpassung oder die Bitauswahl für ein HARQ system beeinflussen, und wie solche Parameter signalisiert werden können. Tatsächlich lassen sich auch durch Variation anderer Parameter Verbesserungen in der Übertragungsrate erzielen. Ein Beispiel für einen derartigen Parameter ist die Variation der Zuordnung von Bits zu 16 QAM Symbolen beim Schritt der Zuweisung von Modulationssymbolen. Das Prinzip dieses Verfahrens ist beispielsweise in den folgenden Standardisierungsdokumenten beschrieben:

R1-01-0237, Panasonic, "Enhanced HARQ Method with Signal Constellation Rearrangement," 3GPP TSG RAN WG1, Las Vegas, USA, February 27th-March 2nd 2001;
R1-01-1059, Panasonic, "Comparison of HARQ Schemes for 16-QAM," 3GPP TSG RAN WG1, Sophia Antipolis, France, November 5th-7th 2001;
R1-01-0151, Panasonic, "16-QAM HARQ Bitmapping Scheme", Espoo, Finland, January, 2002.

Dieses Verfahren erzielt im Wesentlichen dann gute Ergebnisse, wenn die gleiche Redundanzversion wiederholt verwendet wird (Chase combining) oder wenn sich die Redundanzversionen in ihrem Bitinhalt nur wenig unterscheiden. Im Gegensatz dazu erzielt incremental redundancy dann die besten Ergebnisse, wenn sich die einzelnen gesendeten Redundanzversionen stark unterscheiden. Idealer Weise könnte daher die Signalisierung so ausgelegt werden, dass sowohl verschiedene Redundanzversionen als auch verschiedene Zuordnungs-Varianten für das BitMapping (Bit-Zuordnung) auf 16 QAM-Symbole verwendet werden. Wegen einer begrenzten Verfügbarkeit von Signalisierungsbits ist dies aber nicht immer möglich. In diesem Fall muss eine Entscheidung getroffen werden, ob die Signalisierungsbits für die Auswahl von Redundanzversionen oder die Auswahl von Zuordnungs-Varianten verwendet werden. Im folgenden werden Ausgestaltungen für diese Ausführungsvariante erläutert.
In einem ersten diesen Aspekt betreffenden Ausführungsbeispiel werden dann keine Zuordnungs-varianten sondern ausschließlich Redundanzversionen signalisiert, wenn keine 16 QAM oder 8PSK oder höherwertige Modulation verwendet wird, sondern nur BPSK, QPSK oder eine andere Modulationsar-t welche keine unterschiedlichen Wertigkeiten der Modulationssymbole aufweist.
In einem weiteren Ausführungsbeispiel werden beispielsweise bei der Verwendung einerl6QAM- Modulation werden bevorzugt Zuordnungsvarianten ggf. auf Kosten von Redundanzversionen signalisiert, wenn zur Übertragung so viele Bits zur Verfügung stehen, dass alle anstehenden Bits übertragen werden können, mit anderen Worten, wenn keine Punktierung zur Ratenanpassung verwendet werden muss.

In einem weiteren Ausführungsbeispiel werden auch dann bevorzugt Zuordnungsvarianten signalisiert, (ggf. auf Kosten von Redundanzversionen), wenn zur Übertragung zwar weniger Bits zur Verfügung stehen, so dass nicht alle anstehenden Bits übertragen werden können, mit anderen Worten, dass Punktierung zur Ratenanpassung verwendet werden muss, wenn die Punktierungsrate, also der Anteil der zu punktierenden Bits, einen gewissen vorgegebenen Wert nicht überschreitet. Dieser vorgegebene Wert kann im Prinzip beliebig gewählt werden, sinnvoller weise wird er aber kleiner als 50% sein, da bei einer Punktierung von 50% durch Auswahl von zwei komplett orthogonalen also disjunkten Redundanzversionen eine sehr gute Verbesserung durch inkrementelle Redundanz erreicht werden kann. Andererseits erreicht man in diesem Fall keinen zusätzlichen Gewinn durch Zuordnungsvariationen, da die beiden Übertragungen keine gemeinsamen Bits enthalten, bei denen sich ein Gewinn ergeben könnte. Es ist in diesem Fall also nicht unbedingt notwendig, zusätzlich zu Redundanzversionen auch noch Zuordnungsvariationen zu signalisieren.

In einer weiteren Ausführungsvarianten können die oben genannten Ausführungsvarianten dahingehend erweitert werden, dass nicht in Abhängigkeit von den oben beschriebenen Parametern hart zwischen Signalisierungsformtaten hin und hergeschaltet wird, sondern dass je nach Parameter mehr oder weniger Redundanzversionen oder Zuordnungsvarianten signalisiert werden. Es folgt ein Beispiel für den Fall, dass insgesamt vier Alternativen signalisiert werden können:

- Im Bereich von mehr als 50% Punktierung werden alle vier Alternativen für die Signalisierung von Redundanzversionen verwendet werden und keine Zuordnungs-Varianten signalisiert.

- Im Bereich zwischen 50% Punktierung und 33% Punktierung werden 3 Alternativen für die Signalisierung von Redundanzversionen verwendet werden und eine Alternative für eine Zuordnungs-Variante (welche dann nur bei einer speziellen Redundanzversion angewandt werden kann) signalisiert.

- Im Bereich zwischen 33% Punktierung und 20% Punktierung werden zwei Alternativen (also ein Bit) für die Signalisierung von Redundanzversionen verwendet und ebenfalls zwei Alternativen (also ein Bit) für zwei Zuordnungs-Varianten signalisiert. Damit können Redundanzversion und Zuordnungsvariante unabhängig voneinander ausgewählt werden.

- Im Bereich zwischen 20% und 10% Punktierung wird eine Alternative für die Signalisierung einer Redundanzversionen verwendet (welche dann nur bei einer speziellen Zuordnungs-Version angewandt werden kann), und drei Alternativen für Zuordnungs-Varianten.

- Im Bereich von weniger als 10% Punktierung bis weniger als 33% Repetierung werden alle vier Alternativen für die Signalisierung von Zuordnungs-Varianten verwendet und keine Redundanzversionen signalisiert.

- Im Bereich von mehr als 33% Repetierung werden dann wieder je zwei Alternativen (also je ein Bit) für die Signalisierung von Redundanzversionen und Zuordnungs-Varianten signalisiert. Damit können Redundanzversion und Zuordnungsvariante unabhängig voneinander ausgewählt werden.

In den oben angeführten Ausführungsbeispielen wurde als Kriterium das Verhältnis von zur Übertragung zur Verfügung stehenden Bits zu den anstehenden Bits verwendet, und die sich daraus ergebende Punktierungs- bzw. Repetierungsrate. Es soll darauf hingewiesen werden, dass diese Punktierungsrate zwar die Punktierungsrate sein kann, die sich aus dem Verhältnis der Anzahl der Bits nach der Kanalkodierung zur Anzahl der Bits, die übertragen werden, ergibt, dass es aber auch Fälle geben kann, in denen weitere Zwischenschritte durchgeführt werden. Beispielsweise kann zuerst eine Punktierung auf eine Zwischenanzahl von Bits durchgeführt werden, die der Größe eines Empfangsspeichers entspricht, und erst von dieser Anzahl wird eine Punktierung oder Repetierung auf die Anzahl der zu übertragenden Bits durchgeführt. In diesem Fall würde das Kriterium bevorzugt die Punktierungsrate / Repetierungsrate in diesem zweiten Schritt sein, nicht die Gesamtrate.

Für den in Figur 1 gezeigten Funktionsblock 10 wird gemäß einer Ausführungsvariante der Erfindung ein Interleaver verwendet, welcher kein zufälliges Interleaving sondern ein sehr reguläres Interleaving durchführt. So könnte beispielsweise für den Funktionsblock 10 ein Block-Interleaver verwendet werden. Ist der als Funktionsblock 10 verwendete Interleaver ein sehr regulärer Interleaver und ist die Spaltenanzahl, auf welche der Interleaver die ihm zugeführten .Bits verteilt, und die Anzahl der unterschiedlich stark gewichteten Punkte in dem zweidimensionalen QAM-Symbolraum bzw. allgemein die Anzahl der unterschiedlich stark gewichteten Modulationspunkte teilerfremd, so ergibt sich eine optimale Zuordnung. Gemäß dem derzeitigen Stand der UMTS-Standardisierung wird als Interleaver ein Blockinterleaver mit zusätzlicher Spaltenvertauschung vorgeschlagen, welcher benachbarte Bits auf Spalten verteilt, die Vielfache von "5" voneinander entfernt sind, und anschließend die Spalten vertauscht. Bei Verwendung von 30 Spalten erfolgt die Spaltenpermutation z.B. gemäß dem folgenden Schema: Spalte Nr. 0, 20, 10, 5, 15, 25, 3, 13, 23, 8... Da der Wert "5" mit der Anzahl der unterschiedlichen Bits beispielsweise bei einer 16-QAM-Modulation (nämlich zwei Bits) und einer 64-QAM-Modulation (nämlich drei Bits) teilerfremd ist, ergibt sich z.B. bei dieser Kombination eine gute Verwürfelung bzw. eine gute Abbildung auf die entsprechenden Modulationspunkte.

Dieses oben beschriebene Vorgehen ist sowohl für Punktierung und Repetierung, sowie für verschiedenste Transportformate möglich. Durch geeignete Wahl der Parameter (z. B. Anzahl der Redundanzversionen, Anzahl der Bitströme) kann es auf verschiedene Modulations- und Codierungsschemata angepasst werden.

### *Referenzen*

[25.212] "Multiplexing and Channel Coding (FDD) (Release 1999)," Technical Specification 3GPP TS 25.212

### **Patentansprüche**

1. Verfahren zur Datenübertragung gemäß einem ARQ-Verfahren,
   bei dem von einem Sender (1) Daten in Form von Datenpaketen an einen Empfänger (2) übertragen werden,
   bei dem von dem Sender (1) nach dem Senden eines Datenpakets bei Vorliegen einer entsprechenden Aufforderung des Empfängers (2) mindestens ein Wiederholungsdatenpaket an den Empfänger (2) übertragen wird,
   bei dem die in dem Datenpaket bzw. dem Wiederholungsdatenpaket zu übertragenden Bits einer Bitratenanpassung unterzogen werden, ehe sie von dem Sender (1) an den Empfänger (2) übertragen werden, und
   bei dem zur Bitratenanpassung zu verwendende Bitratenanpassungsmuster, insbesondere zur Berechnung derselben benötigte Parameter, zwischen dem Sender (1) und den Empfänger (2) signalisiert werden, wobei zwischen selbstdekodierbaren und nicht selbstdekodierbaren Datenpaketen unterschieden wird, und im Fall selbstdekodierbarer Datenpakete und/oder nicht selbstdekodierbarer Datenpakete mehrere unterschiedliche Bitratenanpassungsmuster signalisiert werden,
   **dadurch gekennzeichnet,**
   **dass** im Falle einer Punktierung ein Bit zur Anzeige eines selbstdekodierbaren bzw. nicht selbstdekodierbaren Datenpaketes vorgesehen ist und n-1 Bit zur Angabe unterschiedlicher Bitratenanpassungsmuster und im Falle einer Repetierung n Bit zur Angabe unterschiedlicher Bitratenanpassungsmuster als Signalisierungsbits vorgesehen sind.

**2.** Verfahren nach Anspruch 1,
**dadurch gekennzeichnet,**
**dass** die Unterscheidung nach selbstdecodierbaren und nicht selbstdecodierbaren Datenpaketen nur für den Fall einer Punktierung signalisiert wird, nicht aber im Falle einer Repetierung.

**3.** Verfahren nach einem der vorhergehenden Ansprüche,
**dadurch gekennzeichnet,**
**dass** im Falle der Punktierung 2 Bit und im Falle der Repetierung 3 Bit zur Angabe unterschiedlicher Bitratenanpassungsmuster vorgesehen sind.

**4.** Verfahren nach einem der vorhergehenden Ansprüche,
**dadurch gekennzeichnet**,
zur Bitratenanpassung unterschiedliche Bitratenanpassungsmuster für das Datenpaket und das Wiederholungsdatenpaket verwendet werden, so dass Bits mit identischem Informationsursprung nach Durchführung der Bitratenanpassung an unterschiedlichen Stellen in dem Datenpaket und in dem Wiederholungsdatenpaket von dem Sender (1) an den Empfänger (2) übertragen werden.

**5.** Verfahren nach einem der vorhergehenden Ansprüche,
**dadurch gekennzeichnet,**
**dass** im zur Bitratenanpassung die Bits eines kanalcodierten Bitstroms auf mehrere Teilbitströme (A-C) aufgeteilt und die einzelnen Teilbitströme (A-C) jeweils einer separaten Bitratenanpassung unterzogen werden, wobei die Bits der einzelnen Teilbitströme (A-C) nach Durchführung der jeweils entsprechenden Bitratenanpassung für das Datenpaket bzw. Wiederholungsdatenpaket wieder miteinander kombiniert werden.

**6.** Verfahren nach einem der vorhergehenden Ansprüche,
**dadurch gekennzeichnet,**
**dass** die Bits der einzelnen Teilbitströme (A-C) nach Durchführung der jeweils entsprechenden Bitratenanpassung für das Datenpaket bzw. Wiederholungsdatenpaket anteilig miteinander kombiniert werden.

**7.** Verfahren nach einem der vorhergehenden Ansprüche,
**dadurch gekennzeichnet,**
**dass** das für das Wiederholungsdatenpaket verwendete Bitratenanpassungsmuster gegenüber dem für das Datenpaket verwendeten Bitratenanpassungsmuster derart verändert wird, dass bei Durchführung einer QAM-Modulation der zu übertragenden Bits Bits mit dem identischen Informationsgehalt hinsichtlich des Wiederholungsdatenpakets auf andere Punkte in dem QAM-Signalraum abgebildet werden als bei dem ursprünglich gesendeten Datenpaket.

**8.** Verfahren nach einem der vorhergehenden Ansprüche,
**dadurch gekennzeichnet,**
**dass** die Bitratenanpassung mit Hilfe eines Bitratenanpassungsalgorithmus durchgeführt wird, welcher die Bits des Datenpakets bzw. Wiederholungsdatenpakets in Abhängigkeit von dem Wert eines entsprechenden Ratenanpassungsparameters ($e_{ini}$) punktiert oder repetiert, wobei der Wert des Ratenanpassungsparameters ($e_{ini}$) zur Bitratenanpassung der Bits des Wiederholungsdatenpakets gegenüber der Bitratenanpassung der Bits des Datenpakets verändert wird.

**9.** Verfahren nach Anspruch 8,
**dadurch gekennzeichnet,**
**dass** der Bitratenanpassungsalgorithmus derart ausgestaltet ist, dass er zu punktierende bzw. zu repetierende Bits unter Verwendung einer Fehlervariable (e) auswählt, wobei die Fehlervariable (e) zu Beginn des Ratenanpassungsalgorithmus mit dem Wert des Ratenanpassungsparameters ($e_{ini}$) initialisiert wird.

**10.** Verfahren nach einem der vorhergehenden Ansprüche,
**dadurch gekennzeichnet,**
**dass** bei Anforderung mehrerer Wiederholungsdatenpakete durch den Empfänger (2) zur Bitratenanpassung der Bits der einzelnen Wiederholungsdatenpakete unterschiedliche Bitratenanpassungsmuster verwendet werden.

**11.** Vorrichtung zur Datenübertragung gemäß einem ARQ-Verfahren,
wobei von der Vorrichtung (1) Daten in Form von Datenpaketen an einen Empfänger (2) übertragen werden,
wobei die Vorrichtung (1) derart ausgestaltet ist, dass sie nach dem Senden eines Datenpakets bei Vorliegen einer entsprechenden Aufforderung des Empfängers (2) mindestens ein Wiederholungsdatenpaket an den Empfänger (2) überträgt, und
wobei die Vorrichtung (1) eine Bitratenanpassungseinrichtung (19) zur Anwendung einer Bitratenanpassung auf die in dem Datenpaket bzw. in dem Wiederholungsdatenpaket zu übertragenden Bits aufweist,
wobei die Vorrichtung (1) mit der Bitratenanpassungseinrichtung (19) derart ausgestaltet ist, dass zur Bitratenanpassung zu verwendende Bitratenanpassungsmuster, insbesondere die zur Berechnung derselben benötigten Parameter, von dem Sender (1) an den Empfänger (2) signalisiert werden, wobei zwischen selbstdekodierbaren und nicht selbstdekodierbaren Datenpaketen unterschieden wird und im Fall selbstdekodierbarer Datenpakete und/oder nicht selbstdekodierbarer Datenpakete mehrere unterschiedliche Bitratenanpassungsmuster signalisiert werden,
**dadurch gekennzeichnet,**
**dass** die Vorrichtung (1) derart ausgestaltet ist, dass im Falle einer Punktierung ein Bit zur Anzeige eines selbstdekodierbaren bzw. nicht selbstdekodierbaren Datenpaketes vorgesehen ist und n-1 Bit zur Angabe unterschiedlicher Bitratenanpassungsmuster und im Falle einer Repetierung n Bit zur Angabe unterschiedlicher Bitratenanpassungsmuster als Signalisierungsbits vorgesehen sind.

**12.** Vorrichtung nach Anspruch 11,
**dadurch gekennzeichnet,**
**dass** die Unterscheidung nach selbstdecodierbaren und nicht selbstdecodierbaren Datenpaketen nur für den Fall einer Punktierung signalisiert wird, nicht aber im Falle einer Repetierung.

**13.** Vorrichtung nach einem der Ansprüche 11 oder 12,
**dadurch gekennzeichnet,**
**dass** zur Bitratenanpassung der Bits des Wiederholungsdatenpakets und zur Bitratenanpassung der Bits des Datenpakets unterschiedliche Bitratenanpassungsmuster verwendet werden, so dass Bits mit dem identischen Informationsursprung nach Durchführung der Bitratenanpassung an unterschiedlichen Stellen in dem Datenpaket und in dem Wiederholungsdatenpaket von der Vorrichtung (1) an den Empfänger (2) übertragen werden.

**14.** Vorrichtung nach einem der Ansprüche 11 bis 13,
**dadurch gekennzeichnet ,**
**dass** die Bitratenanpassungseinrichtung (19) eine Bitseparationseinrichtung (20) zur Aufteilung der Bits eines kanalcodierten Bitstroms auf mehrere Teilbitströme (A-C), den einzelnen Teilbitströmen (A-C) zugeordnete separate Bitratenanpassungsmittel (21-23), um die einzelnen Teilbitströme (A-C) jeweils einer separaten Bitratenanpassung zu unterziehen, und eine Bitsammeleinrichtung (24) zum Kombinieren der von den einzelnen Bitratenanpassungsmitteln (21-23) ausgegebenen Bits der einzelnen Teilbitströme (A-C) miteinander umfasst.

**15.** Vorrichtung nach einem der Ansprüche 11 bis 14
**dadurch gekennzeichnet,**
**dass** die Vorrichtung (1) zur Durchführung des Verfahrens nach einem der Ansprüche 1-10 ausgestaltet ist.

**16.** Empfänger (2) zum Empfang von in Form von Datenpaketen gemäß einem ARQ-Verfahren übertragenen Daten,
wobei der Empfänger (2) zum Empfang und zur Auswertung von einem gemäß dem Verfahren nach einem der Ansprüche 1-10 übertragenen Datenpaket bzw. Wiederholungsdatenpaket ausgestaltet ist, um den Informationsgehalt des Datenpakets durch gemeinsame Auswertung der in dem Datenpaket und in dem Wiederholungsdatenpaket empfangenen Bits zu bestimmen,
wobei der Empfänger für die empfangsseitige Bitratenanpassung zwischen dem Sender (1) und dem Empfänger (2) signalisierte Bitratenanpassungsmuster, insbesondere zur Berechnung derselben benötigte Parameter, verwendet,
wobei zwischen selbstdekodierbaren und nicht selbstdekodierbaren Datenpaketen unterschieden wird, und im Fall selbstdekodierbarer Datenpakete und/oder nicht selbstdekodierbarer
Datenpakete mehrere unterschiedliche Bitratenanpassungsmuster signalisiert werden,
**dadurch gekennzeichnet,**
**dass** der Empfänger (2) zur Verarbeitung signalisierter Bits ausgestaltet ist, wobei im Falle einer Punktierung ein Bit zur Anzeige eines selbstdekodierbaren bzw. nicht selbstdekodierbaren Datenpaketes vorgesehen ist und n-1 Bit zur Angabe unterschiedlicher Bitratenanpassungsmuster und im Falle einer Repetierung n Bit zur Angabe unterschiedlicher Bitratenanpassungsmuster als Signalisierungsbits vorgesehen sind.

**Claims**

1. Method for transferring data according to an ARQ method,
   wherein data is transferred from a transmitter (1) to a receiver (2) in the form of data packets,
   wherein at least one repeat data packet is transferred to the receiver (2) by the transmitter (1) after transmission of a data packet, if a corresponding request is issued by the receiver (2),
   wherein the bits to be transferred in the data packet or repeat data packet are subjected to bit rate adaptation before they are transferred from the transmitter (1) to the receiver (2), and
   wherein bit rate adaptation models to be used for bit rate adaptation, in particular parameters required for calculation of the same, are signalled between the transmitter (1) and the receiver (2), wherein a distinction is made between self-decoding and non-self-decoding data packets, and in the case of self-decoding data packets and/or non-self-decoding data packets several different bit rate adaptation models are signalled,
   **characterised in that**
   in the case of puncturing, one bit is provided for indicating a self-decoding or non-self-decoding data packet and n-1 bits are provided for indicating different bit rate adaptation models, and, in the case of repetition, n bits are provided as signalling bits for indicating different bit rate adaptation models.

2. Method according to claim 1,
   **characterised in that**
   the differentiation according to self-decoding and non-self-decoding data packets is signalled only in the case of puncturing, but not in the case of repetition.

3. Method according to one of the above claims,
   **characterized in that**
   2 bits are provided in the case of puncturing, and 3 bits are provided in the case of repetition, for indicating different bit rate adaptation models.

4. Method according to one of the above claims,
   **characterised in that**
   different bit rate adaptation models are used for bit rate adaptation for the data packet and the repeat data packet, so that bits with an identical information source are transferred from the transmitter (1) to the receiver (2) after bit rate adaptation is carried out at different places in the data packet and in the repeat data packet.

5. Method according to one of the above claims,
   **characterised in that**
   for the purpose of bit rate adaptation the bits of a channel-coded bit stream are divided into several partial bit streams (A-C), and the individual partial bit streams (A-C) are each subjected to a separate bit rate adaptation process, wherein the bits of the individual partial bit streams (A-C) are combined with one another again after the corresponding bit rate adaptation for the data packet or repeat data packet has been carried out.

6. Method according to one of the above claims,
   **characterised in that**
   the bits of the individual partial bit streams (A-C) are combined with one another proportionately after the corresponding bit rate adaptation for the data packet or repeat data packet has been carried out in each case.

7. Method according to one of the above claims,
   **characterised in that**
   the bit rate adaptation model used for the repeat data packet is modified compared to the bit rate adaptation model used for the data packet, such that when a QAM modulation of the bits to be transferred is carried out, bits with identical information content are mapped with regard to the repeat data packet onto different points in the QAM signal area than for the originally transmitted data packet.

8. Method according to one of the above claims,
   **characterised in that**
   bit rate adaptation is carried out with the aid of a bit rate adaptation algorithm, which punctures or repeats the bits of the data packet or repeat data packet depending on the value of a corresponding rate adaptation parameter ($e_{ini}$), wherein the value of the rate adaptation parameter ($e_{ini}$) is modified for the bit rate adaptation of the bits in the repeat data packet compared to the bit rate adaptation of the bits in the data packet.

**9.** Method according to claim 8
**characterised in that**
the bit rate adaptation algorithm is designed such that it selects the bits to be punctured or repeated using an error variable (e), wherein said error variable (e) is initialised with the value of the rate adaptation parameter ($e_{ini}$) at the start of the rate adaptation algorithm.

**10.** Method according to one of the above claims,
**characterised in that**
when several repeat data packets are requested by the receiver (2) for bit rate adaptation of the bits in the individual repeat data packets, different bit rate adaptation models are used.

**11.** Device for transferring data according to an ARQ method,
wherein data is transferred from the device (1) to a receiver (2) in the form of data packets,
wherein the device (1) is designed such that, after transmission of a data packet, said device transfers at least one repeat data packet to the receiver (2) if a corresponding request has been issued by the receiver (2), and wherein the device (1) has a bit rate adaptation unit (19) for applying bit rate adaptation to the bits to be transferred in the data packet or repeat data packet,
wherein the device (1) with the bit rate adaptation unit (19) is designed such that bit rate adaptation models to be used for bit rate adaptation, in particular the parameters required for calculation of the same, are signalled from the transmitter (1) to the receiver (2), wherein a distinction is made between self-decoding and non-self-decoding data packets, and in the case of self-decoding data packets and/or non-self-decoding data packets several different bit rate adaptation models are signalled,
**characterised in that**
the device (1) is designed such that in the case of puncturing, one bit is provided for indicating a self-decoding or non-self-decoding data packet and n-1 bits are provided for indicating different bit rate adaptation models, and, in the case of repetition, n bits are provided as signalling bits for indicating different bit rate adaptation models.

**12.** Device according to claim 11,
**characterised in that**
the differentiation according to self-decoding and non-self-decoding data packets is signalled only in the case of puncturing, and not in the case of repetition.

**13.** Device according to one of claims 11 or 12,
**characterised in that**
different bit rate adaptation models are used for bit rate adaptation of the bits in the repeat data packet and for bit rate adaptation of the bits in the data packet, so that bits with an identical information source are transferred from the device (1) to the receiver (2) after bit rate adaptation is carried out at different places in the data packet and in the repeat data packet.

**14.** Device according to one of claims 11 to 13,
**characterised in that**
the bit rate adaptation unit (19) includes a bit separation unit (20) for separating the bits in a channel-coded bit stream into several partial bit streams (A-C), separate bit rate adaptation means (21 - 23) allocated to the individual partial bit streams (A-C), in order to subject the individual partial bit streams (A-C) to a separate bit rate adaptation process in each case, and a bit collection unit (24) for combining the bits from the individual partial bit streams (A-C) produced by the individual bit rate adaptation means (21-23).

**15.** Device according to one of claims 11 to 14,
**characterised in that**
the device (1) is designed for executing the method according to one of claims 1 - 10.

**16.** Receiver (2) for receiving data transferred in the form of data packets according to an ARQ method,
wherein the receiver (2) is designed for receiving and evaluating a data packet or repeat data packet transferred according to the method described in one of the claims 1 - 10, in order to determine the information content of the data packet by evaluating together the bits received in the data packet and in the repeat data packet,
wherein the receiver uses bit rate adaptation models signalled between the transmitter (1) and the receiver (2), in particular for calculating the same required parameters, for the receiver-side bit rate adaptation,
wherein a distinction is made between self-decoding and non-self-decoding data packets, and in the case of self-decoding data packets and/or non-self-decoding data packets several different bit rate adaptation models are signalled,

**characterised in that**

the receiver (2) is designed to process signalled bits,

wherein in the case of puncturing, one bit is provided for indicating a self-decoding or non-self-decoding data packet and n-1 bits are provided for indicating different bit rate adaptation models, and, in the case of repetition, n bits are provided as signalling bits for indicating different bit rate adaptation models.

**Revendications**

1. Procédé pour la transmission de données selon un procédé ARQ, dans lequel des données sont transmises sous forme de paquets de données d'un émetteur (1) à un récepteur (2), dans lequel l'émetteur (1) transmet au moins un paquet de données de répétition au récepteur (2) après l'envoi d'un paquet de données si on a une demande dans ce sens du récepteur (2) dans lequel les bits,

    à transmettre dans le paquet de données resp. le paquet de données de répétition, sont soumis à une adaptation de débit binaire avant qu'il soit transmis de l'émetteur (1) au récepteur (2),

    et dans lequel des modèles d'adaptation de débit binaire à utiliser pour l'adaptation du débit binaire, en particulier des paramètres utilisés pour le calcul de ces modèles, sont signalés entre l'émetteur (1) et le récepteur (2), sachant qu'on fait une distinction entre des paquets de données autodécodables et des paquets de données non autodécodables, et plusieurs modèles d'adaptation de débit binaire différents sont signalés dans le cas de paquets de données autodécodables et/ou de paquets de données non autodécodables,

    **caractérisé en ce que**, dans le cas d'un pointillage, un bit est prévu pour l'affichage d'un paquet de données autodécodable resp. d'un paquet de données non autodécodable et n-1 bits sont prévus pour l'indication de différents modèles d'adaptation de débit binaire et, dans le cas d'une répétition, n bit sont prévus pour l'indication de différents modèles d'adaptation de débit binaire sous forme de bit de signalisation.

2. Procédé selon la revendication 1, **caractérisé en ce que** la différenciation en paquets de données autodécodables et paquets de données non autodécodables n'est signalée que pour le cas d'un pointillage, mais pas dans le cas d'une répétition.

3. Procédé selon l'une quelconque des revendications précédentes, **caractérisé en ce que** 2 bits dans le cas du pointillage et 3 bits dans le cas de la répétition sont prévus pour l'indication de différents modèles d'adaptation de débit binaire.

4. Procédé selon l'une quelconque des revendications précédentes, **caractérisé en ce que** pour l'adaptation du débit binaire, différents modèles d'adaptation de débit binaire sont utilisés pour le paquet de données et le paquet de données de répétition, de sorte que des bits avec une origine d'information identique sont transmis de l'émetteur (1) au récepteur (2) après la réalisation de l'adaptation du débit binaire en différents endroits dans le paquet de données et dans le paquet de données de répétition.

5. Procédé selon l'une quelconque des revendications précédentes, **caractérisé en ce que**, pour l'adaptation du débit binaire, les bits d'un flux de bits codé au niveau du canal sont répartis entre plusieurs flux de bits partiels (A-C) et les flux de bits partiels (A-C) individuels sont soumis chacun à une adaptation séparée du débit binaire, les bits des flux de bits partiels (A-C) individuels étant combinés à nouveau les uns avec les autres après la réalisation de l'adaptation de débit binaire spécifique correspondant pour le paquet de données resp. le paquet de données de répétition.

6. Procédé selon l'une quelconque des revendications précédentes, **caractérisé en ce que** les bits des flux de bits partiels (A-C) individuels sont combinés au prorata les uns avec les autres après la réalisation de l'adaptation du débit binaire spécifique correspondant pour le paquet de données resp. le paquet de données de répétition.

7. Procédé selon l'une quelconque des revendications précédentes, **caractérisé en ce que** le modèle d'adaptation de débit binaire utilisé pour le paquet de données de répétition est modifié par rapport au modèle d'adaptation de débit binaire utilisé pour le paquet de données de telle sorte, en cas de réalisation d'une modulation QAM des bits à transmettre, des bits avec la teneur en information identique en ce qui concerne le paquet de données de répétition sont reproduits dans l'espace de signal QAM sur d'autres points qu'avec le paquet de données envoyé à l'origine.

8. Procédé selon l'une quelconque des revendications précédentes, **caractérisé en ce que** l'adaptation du débit binaire est effectuée à l'aide d'un algorithme d'adaptation de débit binaire qui pointille ou répète les bits du paquet de données resp. du paquet de données de répétition en fonction de la valeur d'un paramètre correspondant d'adaptation du débit $(e_{ini})$, la valeur du paramètre d'adaptation du débit $(e_{ini})$ étant modifiée pour l'adaptation du débit binaire des bits du paquet de données de répétition par rapport à l'adaptation du débit binaire des bits du paquet de données.

9. Procédé selon la revendication 8, **caractérisé en ce que** l'algorithme d'adaptation du débit binaire est conçu de telle sorte qu'il sélectionne des bits à pointiller resp. à répéter en utilisant une variable d'erreur $(e)$, la variable d'erreur $(e)$ étant initialisée au début de l'algorithme d'adaptation de débit avec la valeur du paramètre d'adaptation de débit $(e_{ini})$.

10. Procédé selon l'une quelconque des revendications précédentes, **caractérisé en ce que**, en cas de demande de plusieurs paquets de données de répétition par le récepteur (2) pour l'adaptation du débit binaire des bits des paquets de données de répétition individuels, différents modèles d'adaptation du débit binaire sont utilisés.

11. Dispositif pour la transmission de données selon un procédé ARQ,
des données étant transmises par le dispositif (1) sous la forme de paquet de données à un récepteur (2),
le dispositif (1) étant conçu de telle sorte qu'il transmet au moins un paquet de données de répétition au récepteur (2) après l'envoi d'un paquet de données en la présence d'une demande correspondante du récepteur (2), et
le dispositif (1) présentant un dispositif d'adaptation du débit binaire (19) pour l'application d'une adaptation du débit binaire aux bits à transmettre dans le paquet de données resp. dans le paquet de données de répétition,
le dispositif (1) étant conçu avec le dispositif d'adaptation du débit binaire (19) de telle sorte que des modèles d'adaptation du débit binaire à utiliser pour l'adaptation du débit binaire, en particulier les paramètres utilisés pour le calcul de ces modèles, sont signalés de l'émetteur (1) au récepteur (2), sachant qu'on fait une différenciation entre des paquets de données autodécodables et des paquets de données non autodécodables et que plusieurs modèles d'adaptation de débit binaire différents sont signalés dans le cas de paquets de données autodécodables et/ou de paquets de données non autodécodables,
**caractérisé en ce que** le dispositif (1) est conçu de telle sorte que, dans le cas d'un pointillage, un bit est prévu pour l'affichage d'un paquet de données autodécodable ou non autodécodable et n-1 bits sont prévus pour l'indication de différents modèles d'adaptation de débit binaire et, dans le cas d'une répétition, n bits sont prévus pour l'indication de différents modèles d'adaptation du débit binaire sous forme de bits de signalisation.

12. Dispositif selon la revendication 11, **caractérisé en ce que** la différenciation en paquets de données autodécodables et paquets de données non autodécodables est signalée uniquement pour le cas d'un pointillage, mais pas dans le cas d'une répétition.

13. Dispositif selon l'une quelconque des revendications 11 ou 12, **caractérisé en ce que** différents modèles d'adaptation du débit binaire sont utilisés pour l'adaptation du débit binaire des bits du paquet de données de répétition et pour l'adaptation du débit binaire des bits du paquet de données, de sorte que des bits avec l'origine d'information identique sont transmis après la réalisation de l'adaptation du débit binaire du dispositif (1) au récepteur (2) en différents endroits dans le paquet de données et dans le paquet de données de répétition.

14. Dispositif selon l'une quelconque des revendications 11 à 13, **caractérisé en ce que** le dispositif d'adaptation du débit binaire (19) comporte un dispositif de séparation de bit (20) pour la répartition des bits d'un flux de bits codé au niveau du canal entre plusieurs flux de bits partiels (A-C), des moyens d'adaptation du débit binaire (21-23) séparés attribués aux flux de bits partiels (A-C) individuels afin de soumettre les différents flux de bits partiels (A-C) à chaque fois à une adaptation séparée du débit binaire, et un dispositif collecteur de bits (24) pour la combinaison des bits, délivrés par les moyens individuels d'adaptation du débit binaire (21-23), des flux de bits partiels (A-C) individuels.

15. Dispositif selon l'une quelconque des revendications 11 à 14, **caractérisé en ce que** le dispositif (1) est conçu pour la mise en oeuvre du procédé selon l'une quelconque des revendications 1 à 10.

16. Récepteur (2) pour la réception de données transmises sous la forme de paquets de données selon un procédé ARQ, le récepteur (2) étant conçu pour la réception et pour l'analyse d'un paquet de données resp. d'un paquet de données de répétition transmis selon le procédé selon l'une quelconque des revendications 1 à 10, afin de déterminer la teneur en information du paquet de données par une analyse commune des bits reçus dans le paquet de données et dans le paquet de données de répétition,

le récepteur utilisant pour l'adaptation du débit binaire côté réception des modèles d'adaptation du débit binaire signalés entre l'émetteur (1) et le récepteur (2), en particulier des paramètres utilisés pour le calcul de ces modèles, sachant qu'on fait une différenciation entre des paquets de données autodécodables et des paquets de données non autodécodables, et que plusieurs modèles différents d'adaptation du débit binaire sont signalés dans le cas de paquets de données autodécodables et/ou de paquets de données non autodécodables,

**caractérisé en ce que** le récepteur (2) est conçu pour le traitement de bits signalés, sachant que, dans le cas d'un pointillage, un bit est prévu pour l'affichage d'un paquet de données autodécodable resp. d'un paquet non autodécodable et que n-1 bits sont prévus pour l'indication de différents modèles d'adaptation du débit binaire et, dans le cas d'une répétition, n bits sont prévus pour l'indication de différents modèles d'adaptation du débit binaire sous forme de bits de signalisation.

# FIG 1

3

| HARQ-Headererzeugung / Redundanzsteuerung |

Daten

Header

| Hinzufügen von CRC-Bits | ~4

| Codeblock-Segmentierung | ~5

19

| Kanalcodierung | ~6

| Header-Verknüpfung | ~12

| Hinzufügen von CRC-Bits | ~13

| Kanalcodierung | ~14

| Bitseparation | ~20

A    B    C

| Raten-anpassung | | Raten-anpassung | | Raten-anpassung | ~23

21    22

| Bitkollektion | ~24

| Raten-anpassung | ~15

| Hinzufügen von DTX-Bits | ~9

| Interleaving | ~10

| Senderahmen-Segmentierung | ~11

| Interleaving | ~16

| Senderahmen-Segmentierung | ~17

18

| Multiplexen auf Sendekanal |

. . .

# FIG 2

# FIG 3

```
e=e_ini
m=1
e_plus=e_plus
do while m<=X_i
    e=e-e_minus
    if e>0 then
        set bit x_i,m to δ where δ∉{0,1}
    else
        do
            select bit x_i,m
            e=e+e_plus
        while e<=0
    end if
    m=m+1
end do
```

# FIG 4
(STAND DER TECHNIK)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0147124 A